# EUROPÄISCHE PATENTSCHRIFT

(11) **EP 0 922 602 B1**
(45) Veröffentlichungstag und Bekanntmachung des Hinweises auf die Patenterteilung: **27.07.2005**
(21) Anmeldenummer: 98121080.0
(22) Anmeldetag: 06.11.1998
(51) Int. Cl.: B60K 15/04, B65D 39/08

(54) **Fahrzeugbehälter mit modularem Anschlussteil**
Vehicle tank with modular inlet element
Réservoir de véhicule avec élément d'embout modulaire

(30) Priorität: 12.12.1997 DE 19755297
(43) Veröffentlichungstag der Anmeldung: 16.06.1999
(73) Patentinhaber: MAN Nutzfahrzeuge Aktiengesellschaft, 80976 München (DE)
(72) Erfinder: Tittel, Matthias, 85253 Erdweg (DE); Burger, Norbert, 84030 Ergolding (DE)

(56) Entgegenhaltungen:
- EP-A- 0 163 877
- DE-A- 3 018 242
- FR-A- 1 496 616
- FR-A- 2 486 031
- US-A- 3 828 418

## Beschreibung

Die Erfindung bezieht sich auf einen Behälter für Kraftfahrzeuge gemäß dem Oberbegriff des Anspruches 1.

Aus der DE 196 02 819 A1 ist ein Kraftstoffbehälter aus Kunststoff bekannt, an dessen tiefergelegenen Öffnung ein Einsatz mit einem Absaugrohr angeordnet ist. Der Einsatz weist einen umlaufenden Flansch auf, der mit der Außenwand des Kraftstoffbehälters dicht verschweißt ist.

Aus der EP 0 783 989 A1 ist ein Kraftstoffbehälter mit einem Einfüllstutzen bekannt, der über eine diesen aufnehmende Haltemanschette an einem am Kraftstoffbehälter angeschweißten Einsatz anschließbar ist.

Aus der US-A-382 84 18 (beinhaltet die Merkmale des Oberbegriffs des unabhängigen Anspruchs) ist eine zylindrische Buchse aus Kunststoffmaterial bekannt, die mit ihrem Außenprofil in Öffnungen von Behältern einrastbar ist. An einem Innengewinde der Buchse sind einschraubbare Gehäusedeckel, Zapfhähne oder dergleichen befestigbar. Zwischen einem Randbereich des Gehäusedeckels und einem Auflagebereich des Behälters kommt eine Axialdichtung zur anpressenden Anlage.

Der Erfindung liegt die Aufgabe zugrunde, die Anbringung von an Fahrzeugbehältern vorzusehender Anschlüsse technisch und wirtschaftlich zu optimieren.

Diese Aufgabe wird erfindungsgemäß durch die Merkmale des Anspruches 1 gelöst.

Durch die erfindungsgemäße Lösung ist eine universal einsetzbare und technisch zuverlässige Anschlussmöglichkeit von an Behältern von Kraftfahrzeugen anzuordnender Anschlussteile unterschiedlichster Verwendungsart ermöglicht. Dabei sind die Anschlussteile über eine geeignete Verbindungsart an einem am Behälter verrasteten Einsatz befestigbar. Der Einsatz ist mit seinem Schaftabschnitt innerhalb eines umfangsseitig der Öffnung des Behälters gebildeten Randprofils abdichtend aufgenommen und an diesem mittels eines am Schaftabschnitt des Einsatzes umlaufend gebildeten Einfassprofils clipsartig festrastbar.

Dabei stützt sich das Einfassprofil des Einsatzes in Festrastposition einerseits mit einem an diesem gebildeten, umlaufenden Absatz an einer behälterinnenseitig umlaufenden Anlagekante des Randprofils des Behälters und andererseits unter Gegenzug mit einem am Einsatz umlaufend angeordneten Spannring an einem außenseitigen Bereich des Behälters ab. Im Bereich eines Profilgrundes des Einfassprofils ist mindestens eine gegen das Randprofil des Behälters abdichtende, umlaufende Radialdichtung angeordnet. Somit ist ein technisch zuverlässiges Clipssystem hoher Dichtwirkung gegeben, das eine montagegünstige Befestigung des Einsatzes am Behälter gewährleistet und eine gute Kombinierbarkeit von Behältern und Anschlussteilen unterschiedlichster Ausführungs- und Einsatzmöglichkeiten gestattet. Dabei können die Anschlussteile über eine mit dem Einsatz gemeinsam gebildete Verschraubung oder einer anderen geeigneten Verbindungsart am verrasteten Einsatz befestigt sein. Der Spannring des Einsatzes ist als separates Bauteil ausgeführt.

Gemäß einer weiteren Ausgestaltung der Erfindung kann sich der separate Spannring einerseits stirnseitig mit einem Ringabschnitt an einem am Schaftabschnitt des Einsatzes umlaufend gebildeten Vorsprung und andererseits über den am Umfang des Spannringes umlaufend gebildeten Auflagerand an der niveautieferen Ebene des Behälters abstützen.

Gemäß einer weiteren Ausgestaltung der Erfindung kann der behälteraußenseitige Bereich durch eine gegenüber einer Außenkontur des Behälters niveautiefere Ebene gebildet sein, auf dieser der endseitig des Spannringes des Einsatzes vorgesehene, umlaufende Auflagerand abstützend aufliegt. Infolge des Vorsehens der niveautieferen Ebene ist ein Überragen des mit dem Einsatz verbundenen Anschlussteiles über die Außenkontur des Behälters hinweg vorteilhaft vermieden.

Gemäß einer weiteren Ausgestaltung der Erfindung kann der Ringabschnitt des separaten Spannringes auf den Schaftabschnitt des Einsatzes in axialer Richtung aufschiebbar sein und zusammen mit dem umlaufenden Vorsprung des Schaftabschnittes ein Nut-Feder-System bilden. Des weiteren kann die niveautiefere Ebene erhabene Sicken aufweisen, mit denen - zwecks Verdrehsicherung des Einsatzes gegenüber dem Behälter - flankenseitige Absätze des Auflagerandes formschlüssig korrespondieren.

Gemäß einer weiteren Ausgestaltung der Erfindung kann der äußere Abschnitt des Behälters durch ein abragendes, etwa U-förmiges Profil gebildet sein, auf dessen Rücken der Spannring mit einer etwa komplementär zu dem Rücken ausgestalteten Überdeckung aufliegt.

Gemäß einer weiteren Ausgestaltung der Erfindung kann das behälterinnenseitige Ende des Schaftabschnittes einen umlaufenden Auflaufkonus aufweisen, der zwecks Verrastung des Einsatzes am Behälter in die durch das Randprofil begrenzte Öffnung des Behälters einpreßbar ist, wobei in dieser Festrastposition der am Einfaßprofil des Einsatzes umlaufend gebildete Absatz an der umlaufenden Anlagekante des Behälters zur Anlage kommt.

Gemäß einer weiteren Ausgestaltung der Erfindung kann der Spannring und/oder der Auflaufkonus des Einsatzes eine erhöhte, radiale Nachgiebigkeit aufweisen. Diese erhöhte, radiale Nachgiebigkeit kann durch am Umfang des Spannringes und am Umfang des Auflaufkonus vorgesehene, zueinander beabstandete und in Längsrichtung des Einsatzes angeordnete Aussparungen gegeben sein. Der umlaufende Absatz des Einfaßprofiles kann einen bei Verrastung des Einfaßprofiles am Randprofil dessen Anlagekante hintergreifenden, umlaufenden Vorsprung aufweisen. Auf diese Weise ist der am Behälter verrastete Einsatz zusätzlich gegen Loslösung gesichert.

Gemäß einer weiteren Ausgestaltung der Erfindung kann der Schaftabschnitt des Einsatzes innenseitig eine umlaufende Nut zur Aufnahme eines Auflageringes, einer Auflagebuchse, eines Siebs oder dergleichen aufweisen. Der Schaftabschnitt kann an seinem innenseitigen Ende eine zusätzliche, umlaufende Nut zur Aufnahme eines Spannringes aufweisen. Dieser Spannring kann die Formstabilität des Einsatzes im Bereich des Einfaßprofiles des Einsatzes erhöhen und somit die Arretierwirkung der Clipsverbindung von Einsatz und Behälter erhöhen.

Gemäß einer weiteren Ausgestaltung der Erfindung kann der Einsatz wenigstens im Bereich seines Profilgrundes - zwecks Verdrehsicherung gegenüber dem Behälter - einen zu der Öffnung des Randprofiles des Behälters etwa komplementär ausgebildeten, von einem Kreisquerschnitt verschiedenen Querschnitt aufweisen. Im Profilgrund kann wenigstens eine umlaufende Ringnut zur Aufnahme der zu einer Anlagefläche des Randprofiles hin abdichtenden Radialdichtung vorgesehen sein. Auf diese Weise ist die Dichtwirkung zwischen Einsatz und Behälter weiter erhöht.

Gemäß einer weiteren Ausgestaltung der Erfindung kann das Anschlußteil über eine Verschraubung am Einsatz befestigbar sein. Das Anschlußteil kann durch einen Anschlußstutzen oder durch einen Verschlußdeckel gegeben sein. Der Behälter kann durch einen Kraftstoffbehälter, einen Druckluftkessel, eine Ölwanne, einen Wärmetauscher oder dergleichen gegeben sein. Der Anschlußstutzen kann durch ein Anschlußstück eines Vorratsgebers, durch eine Versorgungseinheit, durch ein Entwässerungsventil für Druckluftkessel, durch eine Druckluftadaption für Leitungssysteme oder durch einen Tankeinfüllstutzen oder dergleichen gegeben sein.

Gemäß einer weiteren Ausgestaltung der Erfindung kann am Umfang des Anschlußstutzens endseitig der von diesem und dem Einsatz gemeinsam gebildeten Verschraubung mindestens eine umlaufende Ringnut zur Aufnahme einer zu einer Innenfläche des Einsatzes hin abdichtenden Dichtung vorgesehen sein. Bei Bedarf ist die Anzahl der zwischen Einsatz und Anschlußstutzen vorzusehenen Dichtungen beliebig erweiterbar. Die jeweiligen Ringnuten zur Aufnahme dieser Dichtungen können alternativ auch innenseitig des Einsatzes vorgesehen sein.

Gemäß einer weiteren Ausgestaltung der Erfindung kann bei Vorsehen eines Tankeinfüllstutzens als Anschlußstutzen dieser zwecks Stabilisierung im Behälter sich endseitig mit einer Anlagefläche an einem innenseitig des Behälters vorgesehenen Gegenhalter abstützen: In den Tankeinfüllstutzen kann ein Tanksieb einsetzbar sein. Der Tankeinfüllstutzen kann behälterinnenseitig wenigstens einen Durchbruch zum Durchlaß von Treibstoff aufweisen und behälteraußenseitig mittels eines Deckels abschließbar sein.

Gemäß einer weiteren Ausgestaltung der Erfindung kann der Einsatz ein Einfüllstutzen sein. Bei dieser Version kann in besonders vorteilhafter Weise ein zusätzliches Bauteil eingespart werden.

Die Behälter können aus Kunststoffen, Stahl-, Aluminium- oder Antiphonblechen bestehend sein. Die Anschlußteile können beispielsweise aus Metall oder Kunststoff (z. B. GFK) gefertigt sein.

Nachfolgend ist die Erfindung anhand in der Zeichnung dargestellter Ausführungsbeispiele näher erläutert.

Es zeigen:
- Fig. 1: schematisch und ausschnittsweise eine erste Ausführungsart eines an einem Kraftstoffbehälter eines Kraftfahrzeuges angeordneten Einsatzes mit einem Einfüllstutzen, (nur zur Information, zeigt nicht den Schutzumfang des unabhängigen Anspruchs)
- Fig. 2: schematisch und ausschnittsweise eine zweite Ausführungsart eines an einem Behälter eines Kraftfahrzeuges angeordneten Einsatzes, (nur zur Information, zeigt nicht den Schutzumfang des unabhängigen Anspruchs)
- Fig. 3: schematisch und ausschnittsweise eine dritte Ausführungsart eines an einem Behälter eines Kraftfahrzeuges angeordneten Einsatzes, (nur zur Information, zeigt nicht den Schutzumfang des unabhängigen Anspruchs)
- Fig. 4: schematisch und ausschnittsweise eine vierte Ausführungsart eines an einem Fahrzeugbehälter befestigten, zweiteiligen Einsatzes und
- Fig. 5: je Zeichnungshälfte eine weitere unterschiedliche Variante eines einteiligen Einsatzes. (nur zur Information, zeigt nicht den Schutzumfang des unabhängigen Anspruchs)

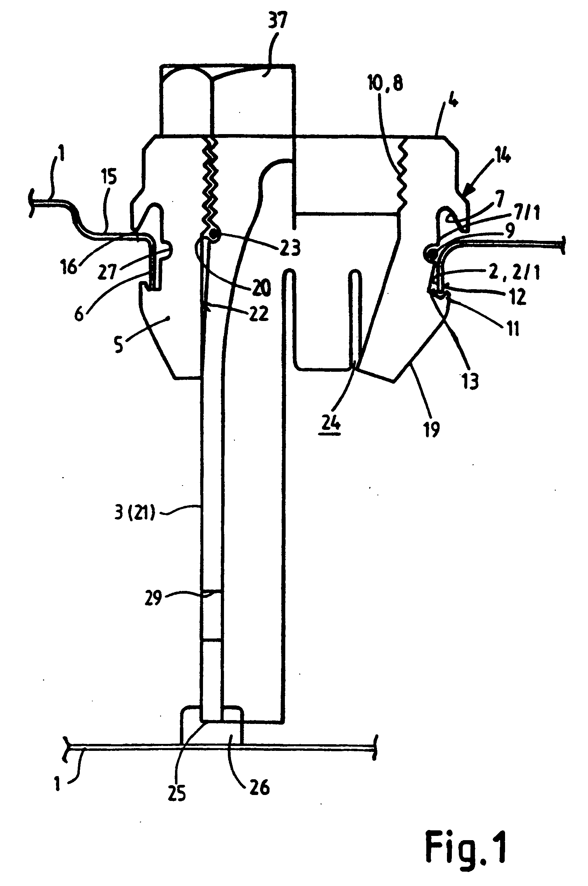

In Fig. 1 ist ausschnittsweise ein Behälter 1 eines Kraftfahrzeuges dargestellt, der im Bereich einer Öffnung 2 außenseitig eine gegenüber seiner Außenkontur niveautiefere Ebene 15 aufweist. Innerhalb der Öffnung 2 ist ein Einsatz 4 angeordnet, der mit seinem Schaftabschnitt 5 von einem umfangsseitig der Öffnung 2 des Behälters 1 gebildeten Randprofil 6 abdichtend aufgenommen und an diesem mittels eines am Schaftabschnitt 5 des Einsatzes 4 umlaufend gebildeten Einfaßprofiles 7 clipsartig festrastbar ist. Im Bereich eines Profilgrundes 7/1 des Einfaßprofiles 7 ist eine gegen eine Anlagefläche 2/1 des Randprofiles 6 abdichtende, umlaufende Radialdichtung 9 vorgesehen. Diese ist in einer im Profilgrund 7/1 des Einfaßprofiles 7 vorgesehenen Ringnut 27 aufgenommen. Das Einfaßprofil 7 des Einsatzes 4 stützt sich einerseits mit einem an diesem gebildeten, umlaufenden Absatz 13 an einer einwärts des Behälters 1 gerichteten, umlaufenden Anlagekante 12 des Randprofiles 6 und andererseits unter Gegenzug mit einem am Einfaßprofil 7 angeordneten Spannring 14 an der behälteraußenseitigen, niveautieferen Ebene 15 des Behälters 1 ab. Innerhalb des Einsatzes 4 ist das Anschlußteil 3 über eine gemeinsam gebildete Verschraubung 8, 10 am Einsatz 4 befestigt und liegt mit einem Schaft 21 an einer zylindrischen Innenfläche 22 des Einsatzes 4 an. Die Verschraubung 8, 10 ist durch ein Innengewinde 8 des Einsatzes 4 und durch ein Außengewinde 10 des Anschlußteiles 3 gebildet. Im endseitigen Verlauf der Verschraubung 8, 10 weist der Schaft 21 des Anschlußteiles 3 eine umlaufende Ringnut 20 zur Aufnahme einer Dichtung 23 auf. Diese liegt abdichtend an der Innenfläche 22 des Einsatzes 4 an. Der in der hier gezeigten Version einteilig mit dem Einsatz 4 gebildete Spannring 14 liegt mittels eines endseitig an diesem gebildeten, umlaufenden Auflagerand 16 auf der niveautieferen Ebene 15 des Behälters 1 auf. In der hier gezeigten Version ist das Anschlußteil 3 durch einen Einfüllstutzen und der Behälter 1 durch einen Kraftstofftank gebildet. Der Einfüllstutzen 3 ist durch einen behälteraußenseitig angeordneten Deckel 37 verschlossen.

Der Schaftabschnitt 5 des Einsatzes 4 weist endseitig einen dem Einfaßprofil 7 nachgeordneten Auflaufkonus 19 mit erhöhter Nachgiebigkeit auf. Dieser Auflaufkonus 19 ist zwecks Montage des Einsatzes 4 am Behälter 1 in die durch das Randprofil 6 begrenzte Öffnung 2 einpreßbar und über den umlaufenden Absatz 13 des Einfaßprofiles 7 an einer umlaufenden Anlagekante 12 des Randprofiles 6 des Behälters 1 gehalten. Die erhöhte Nachgiebigkeit des Auflaufkonus 19 ist durch an dessen Umfang vorgesehene, zueinander beabstandete und in Längsrichtung des Einsatzes 4 angeordnete Aussparungen 24 gegeben. Diese können verschiedene geometrische Formen aufweisen. Des weiteren kann auch eine der Montage des Einsatzes 4 zuträgliche Nachgiebigkeit am Randprofil 6, beispielsweise durch eine in diesem Bereich gegebene Wandstärkenreduzierung vorgesehen sein.

Der umlaufende Absatz 13 des Einfaßprofiles 7 weist besserer Verrastbarkeit am Randprofil 6 einen die Anlagekante 12 des Randprofiles 6 hintergreifenden, umlaufenden Vorsprung 11 auf. Gemäß der hier gezeigten Version stützt sich der Anschlußstutzen 3 zwecks seiner Stabilisierung im Behälter 1 zusätzlich mit einer endseitig seines Schaftes 21 gebildeten Anlagefläche 25 an einem innenseitig des Behälters 1 vorgesehenen Gegenhalter 26 unter Formschluß ab. Der Gegenhalter 26 weist eine zu der Anlagefläche 25 komplementär ausgebildete Kontur auf. Der Gegenhalter 26 kann durch eine entsprechende Ausgestaltung des Behälters 1 oder durch ein separates, an diesem zu befestigendes Bauteil gebildet sein. Der Einfüllstutzen 3 weist behälterinnenseitig wenigstens einen Durchbruch 29 zum Durchlaß von Treibstoff auf. In einer hier nicht gezeigten Version kann in den Einfüllstutzen 3 ein Tanksieb, ein Auflagering, eine Auflagebuchse, ein Spannring oder dergleichen einsetzbar sein.

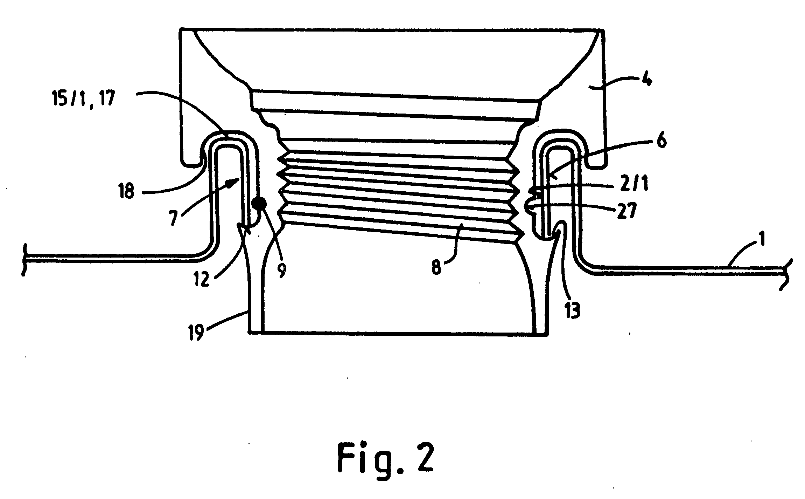

In Fig. 2 ist in Schnittdarstellung ein an einem Behälter 1 eines Kraftfahrzeuges festgerasteter Einsatz 4 für die befestigende Aufnahme eines Anschlußteiles gezeigt. Der außenseitige Bereich 15, 15/1 des Behälters 1 ist in dieser Version durch ein erhaben gestaltetes, etwa U-förmiges Profil 15/1 gebildet. Auf einem Rücken 17 des U-förmigen Profiles 15/1 liegt der in der hier gezeigten Version modifiziert ausgeführte Spannring 14 des Einsatzes 4 als eine komplementär zu dem Rücken 17 ausgestaltete Überdeckung 18 formschlüssig auf.

Des weiteren weist der Einsatz 4 in einer umfangsseitig gebildeten Ringnut 27 eine zur Anlagefläche 2/1 des Randprofiles 6 hin abdichtende Ringdichtung 9 auf. Das in dieser Version durch Überdeckung 18 und umlaufendem Absatz 13 gebildete Einfaßprofil 7 des Einsatzes 4 stützt sich bei seiner Verrastung am Randprofil 6 des Behälters 1 sowohl an der umlaufenden Anlagekante 12 des Randprofiles 6 als auch an dem Rücken 17 des U-förmigen Profiles 15/1 des Randprofiles 6 ab. Der Einsatz 4 weist innenseitig zur Aufnahme und Anbringung eines hier nicht gezeigten Anschlußteiles eine auf dieses abgestimmte Innenkontur und ein Innengewinde 8 auf. Der Einsatz 4 weist am behälterinnenseitigen Bereich seines Umfangs zwecks verbesserter Verrastbarkeit am Behälter 1 einen Auflaufkonus 19 auf. Dieser kann, wie in Fig. 1 beschrieben, eine erhöhte Nachgiebigkeit aufweisen.

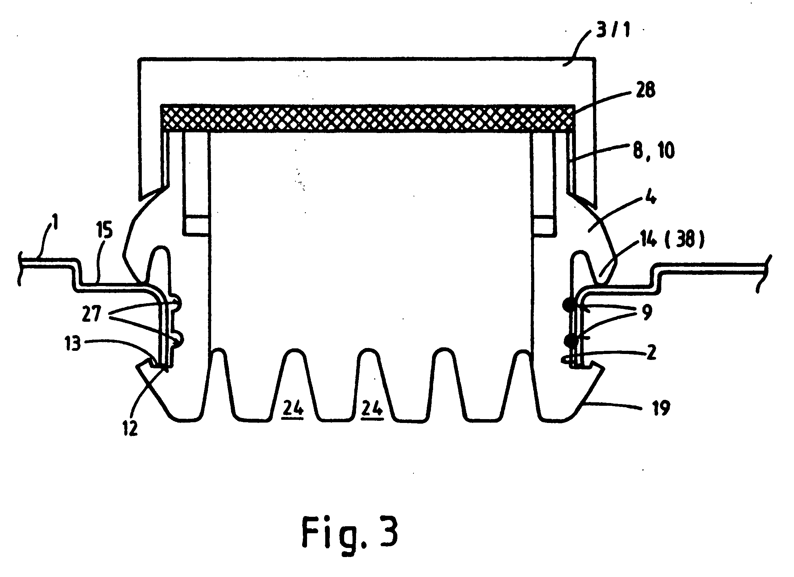

Bei dem in Fig. 3 gezeigten Einsatz 4 weist der Profilgrund 7/1 des Einfaßprofiles 7 eine zusätzliche Ringnut 27 zur Aufnahme einer weiteren Ringdichtung 9 auf. Der auf der niveautieferen Ebene 15 abstützend aufliegende Spannring 14 ist einteilig mit dem Einsatz 4 gebildet. An dem Einsatz 4 ist behälteraußenseitig mittels Verschraubung 8, 10 ein Verschlußdeckel 3/1 angebracht. Zwischen diesem und dem Einsatz 4 ist eine Axialdichtung 28 angeordnet. Des weiteren weist der Spannring 14 zwecks Erhöhung seiner Nachgiebigkeit in Längsrichtung des Einsatzes 4 angeordnete Aussparungen 38 auf.

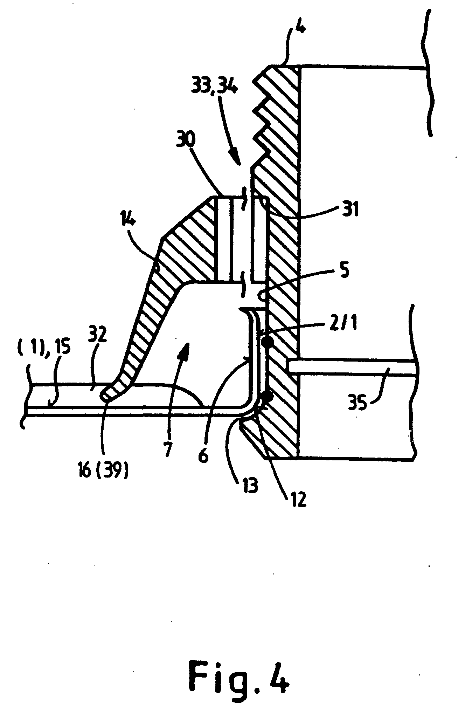

Bei dem in Fig. 4 gezeigten Ausführungsbeispiel weist der an einem Behälter 1 verrastete Einsatz 4 einen separat angeordneten Spannring 14 auf. Der separate Spannring 14 ist mit einem Ringabschnitt 30 über ein am Schaftabschnitt 5 des Einsatzes 4 gemeinsam gebildetes Nut-Feder-System 33, 34 auf dem Schaftabschnitt 5 des Einsatzes 4 verdrehsicher angeordnet. Der separate Spannring 14 stützt sich dabei einerseits mit seinem Ringabschnitt 30 stirnseitig an einem am Schaftabschnitt 5 umlaufend gebildeten Vorsprung 31 und andererseits über den umlaufenden Auflagerand 16 an der niveautieferen Ebene 15 des Behälters 1 ab.

Des weiteren weist die niveautiefere Ebene 15 des Behälters 1 erhabene Sicken 32 auf, die zwecks Verdrehsicherung des Einsatzes 4 gegenüber dem Behälter 1 mit im Bereich des Auflagerandes 16 des Spannringes 14 gebildeten Absätzen 39 formschlüssig korrespondieren.

Gemäß einer hier nicht gezeigten Version kann der Spannring 14 zwecks erhöhter Nachgiebigkeit im Bereich seines Auflagerandes 16 umfangsseitig in Längsrichtung des Einsatzes 4 angeordnete Aussparungen aufweisen. Der Schaftabschnitt 5 des Einsatzes 4 weist innenseitig eine umlaufende Nut 35 zur Aufnahme eines hier nicht gezeigten Siebs auf. Anstelle des Siebs kann auch ein Auflagering oder eine Auflagebuchse in der Nut 35 aufgenommen sein. In dieser Version ist der die Anlagefläche 2/1 des Randprofils 6 bildende Mantelteil des Behälters 1 zur Außenseite des Behälters 1 hin ausgerichtet. Somit ist die den umlaufenden Absatz 13 des Einsatzes 4 abstützende, umlaufende Anlagekante 12 des Behälters 1 innenseitig im unmittelbaren Ausstülpungsbereich des Randprofiles 6 gebildet.

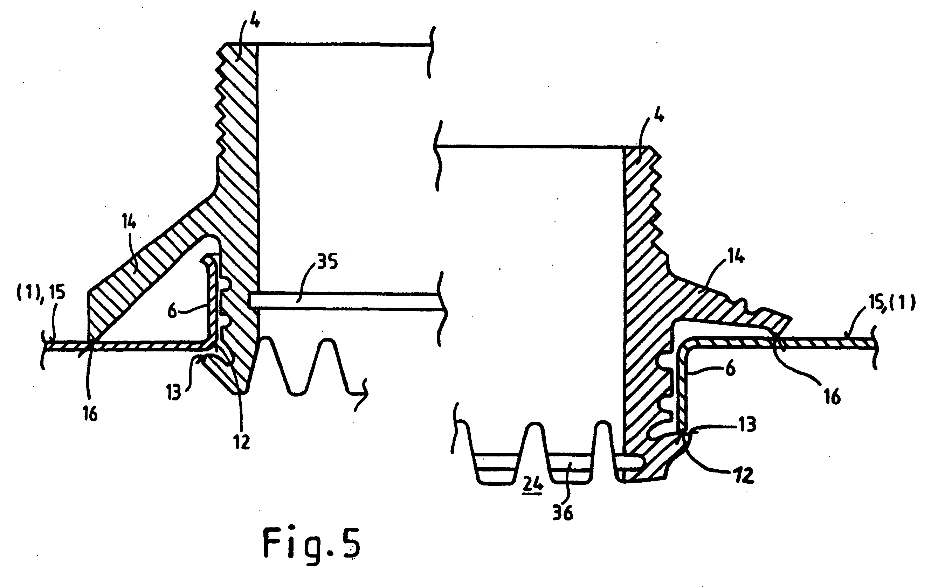

In Fig. 5 ist je Zeichnungshälfe eine weitere Variante eines einstückigen Einsatzes 4 hälftig dargestellt. Der einstückig mit dem Einsatz 4 gebildete Spannring 14 stützt sich bei beiden Varianten mit einem Auflagerand 16 an der niveautieferen Ebene 15 des Behälters 1 ab. Des weiteren ist der Einsatz 4 mit einem umlaufenden Absatz 13 an einer umlaufenden Anlagekante 12 des Randprofiles 6 abgestützt. Bei der in der linken Zeichnungshälfte dargestellten Version ist der Mantel des Randprofiles 6 zur Außenseite des Behälters 1 hin ausgerichtet. Der Einsatz 4 weist innenseitig eine umlaufende Nut 35 zur Aufnahme eines hier nicht gezeigten Siebes oder dergleichen auf.

Bei der in der rechten Zeichnungshälfte der Fig. 5 dargestellten Variante weist der Einsatz 4 an seinem behälterinnenseitigen Ende eine innenseitig umlaufende Nut 36 zur Aufnahme eines hier nicht gezeigten Spannringes auf. Das behälterinnenseitige Ende des Einsatzes 4 ist zur Erzielung einer erhöhten Nachgiebigkeit in diesem Bereich mit in Längsrichtung des Einsatzes 4 angeordneten Aussparungen 24 versehen. Die Aussparungen 24 unterbrechen die innenseitig umlaufende Nut 36. Der in der Nut 36 aufgenommene Spannring hebt die in diesem Bereich des Einsatzes 4 zur Verrastung desselben am Behälter 1 notwendige Nachgiebigkeit auf und sichert somit den zuverlässigen Sitz des Einsatzes 4 am Behälter 1. In der hier gezeigten Version ist der das Randprofil 6 bildende Mantel des Behälters 1 zur Innenseite des Behälters 1 hin ausgerichtet.

## Patentansprüche

1. Behälter für Kraftfahrzeuge, mit einem an einer Öffnung (2) des Behälters (1) angeordneten Einsatz (4), an dem ein Anschlussteil (3, 3/1) befestigbar ist, wobei der Einsatz (4) mit seinem Schaftabschnitt (5) innerhalb eines umfangsseitig der Öffnung (2) des Behälters (1) gebildeten Randprofils (6) abdichtend aufgenommen und an diesem mittels eines am Schaftabschnitt (5) des Einsatzes (4) umlaufend gebildeten Einfassprofils (7) clipsartig festrastbar ist, und wobei sich das Einfassprofil (7) des Einsatzes (4) in Festrastposition einerseits mit einem an diesem gebildeten, umlaufenden Absatz (13) an einer behälterinnenseitig umlaufenden Anlagekante (12) des Randprofils (6) des Behälters (1) und andererseits unter Gegenzug mit einem am Einsatz (4) umlaufend angeordneten Spannring (14) an einem außenseitigen Bereich (15, 15/1) des Behälters (1) abstützt, **dadurch gekennzeichnet, dass** im Bereich eines Profilgrundes (7/1) des Einfassprofils (7) mindestens eine gegen das Randprofil (6) des Behälters (1) abdichtende, umlaufende Radialdichtung (9) angeordnet ist, und dass der Spannring (14) des Einsatzes (4) ein separates Bauteil ist.

2. Behälter nach Anspruch 1, **dadurch gekennzeichnet, dass** sich der separate Spannring (14) einerseits stirnseitig mit einem Ringabschnitt (30) an einem am Schaftabschnitt (5) des Einsatzes (4) umlaufend gebildeten Vorsprung (31) und andererseits über seinen umlaufenden Auflagerand (16) an der niveautieferen Ebene (15) abstützt.

3. Behälter nach Anspruch 1 und 2, **dadurch gekennzeichnet, dass** der behälteraußenseitige Bereich (15, 15/1) durch eine gegenüber einer Außenkontur des Behälters (1) niveautiefere Ebene (15) gebildet ist, auf dieser der endseitig des Spannringes (14) des Einsatzes (4) vorgesehene, umlaufende Auflagerand (16) abstützend aufliegt.

4. Behälter nach Anspruch 1 bis 3, **dadurch gekennzeichnet, dass** der Ringabschnitt (30) des separaten Spannringes (14) auf den Schaftabschnitt (5) des Einsatzes (4) in axialer Richtung aufschiebbar ist und zusammen mit dem umlaufenden Vorsprung (31) des Schaftabschnittes (5) ein Nut-Feder-System (33, 34) bildet, und dass die niveautiefere Ebene (15) erhabene Sicken (32) aufweist, mit denen - zwecks Verdrehsicherung des Einsatzes (4) gegenüber dem Behälter (1) - flankenseitige Absätze (39) des Auflagerandes (16) formschlüssig korrespondieren.

5. Behälter nach Anspruch 1, **dadurch gekennzeichnet, dass** der äußere Abschnitt (15, 15/1) des Behälters (1) durch ein abragendes, etwa U-förmiges Profil (15/1) gebildet ist, auf dessen Rücken (17) der Spannring (14) mit einer etwa komplementär zu dem Rücken (17) ausgestalteten Überdeckung (18) aufliegt.

6. Behälter nach einem oder mehreren der vorangegangenen Ansprüche 1 bis 5, **dadurch gekennzeichnet, dass** das behälterinnenseitige Ende des Schaftabschnittes (5) einen umlaufenden Auflaufkonus (19) aufweist, der zwecks Verrastung des Einsatzes (4) am Behälter (1) in die durch das Randprofil (6) begrenzte Öffnung (2) des Behälters (1) einpressbar ist, wobei in dieser Festrastposition der am Einfassprofil (7) des Einsatzes (4) umlaufend gebildete Absatz (13) an der umlaufenden Anlagekante (12) des Behälters (1) zur Anlage kommt.

7. Behälter nach Anspruch 6, **dadurch gekennzeichnet, dass** der Spannring (14) und/oder der Auflaufkonus (19) des Einsatzes (4) eine erhöhte, radiale Nachgiebigkeit aufweisen, und dass diese erhöhte, radiale Nachgiebigkeit durch am Umfang des Spannringes (14) und am Umfang des Auflaufkonus (19) vorgesehene, zueinander beabstandete und in Längsrichtung des Einsatzes (4) angeordnete Aussparungen (24 bzw. 38) gegeben sind, und dass der umlaufende Absatz (13) des Einfassprofils (7) einen bei Verrastung des Einfassprofils (7) am Randprofil (6) dessen Anlagekante (12) hintergreifenden, umlaufenden Vorsprung (11) aufweist.

8. Behälter nach Anspruch 7, **dadurch gekennzeichnet, dass** der Schaftabschnitt (5) des Einsatzes (4) innenseitig eine umlaufende Nut (35) zur Aufnahme eines Auflageringes, einer Auflagebuchse, eines Siebs oder dergleichen aufweist, und dass der Schaftabschnitt (5) an seinem innenseitigen Ende eine zusätzliche, umlaufende Nut (36) zur Aufnahme eines Spannringes aufweist.

9. Behälter nach einem oder mehreren der vorangegangenen Ansprüche 1 bis 8, **dadurch gekennzeichnet, dass** der Einsatz (4) wenigstens im Bereich seines Profilgrundes (7/1) - zwecks Verdrehsicherung gegenüber dem Behälter (1) - einen zu der Öffnung (2) des Randprofils (6) des Behälters (1) etwa komplementär ausgebildeten, von einem Kreisquerschnitt verschiedenen Querschnitt aufweist, und dass im Profilgrund (7/1) wenigstens eine umlaufende Ringnut (27) zur Aufnahme der zu einer Anlagefläche (2/1) des Randprofils (6) in abdichtenden Radialdichtung (9) vorgesehen ist.

10. Behälter nach einem der vorangegangenen Ansprüche 1 bis 9, **dadurch gekennzeichnet, dass** der Einsatz (4) das Anschlussteil (3, 3/1) über eine gemeinsam gebildete Verschraubung (8, 10) haltert, wobei das Anschlussteil (3, 3/1) durch einen Anschlussstutzen (3) oder durch einen Verschlussdeckel (3/1) gegeben ist und als Anschlussstutzen (3) entweder ein Anschlussstück eines Vorratsgebers, oder eine Versorgungseinheit, oder ein Entwässerungsventil für Druckluftkessel, oder eine Druckluftadaption für Leitungssysteme, oder ein Tankeinfüllstutzen oder dergleichen gegeben ist.

11. Behälter nach einem der vorangegangenen Ansprüche 1 bis 10, **dadurch gekennzeichnet, dass** der Einsatz (4) innenseitig eine endseitig der Verschraubung (8, 10) vorgesehene Innenfläche (22) aufweist, an dieser mindestens eine in einer umfangsseitig des Anschlussstutzens (3) gebildeten Ringnut (20) untergebrachte Dichtung (23) abdichtend anliegt.

12. Behälter nach einem der vorangegangenen Ansprüche 1 bis 11, **dadurch gekennzeichnet, dass** der Einsatz (4) einen Anschlussstutzen (3) haltert, welcher als Tankeinfüllstutzen ausgebildet ist und sich zwecks seiner Stabilisierung im Behälter (1) über eine endseitig vorgesehene Anlagefläche (25) an einem innenseitig des Behälters (1) gegebenen Gegenhalter (26) abstützt.

13. Behälter nach einem der vorangegangenen Ansprüche 1 bis 12, **dadurch gekennzeichnet, dass** der Einsatz (4) ein Einfüllstutzen ist.

## Claims

1. Tank for motor vehicles, with an insert (4) which is arranged at an orifice (2) of the tank (1) and to which a connection piece (3, 3/1) can be fastened, whereby said insert (4) with its shaft section (5) is fitted in a sealing manner within a rim section (6) provided on the circumference of the orifice (2) of the tank (1) and can be locked into place in a clip-type manner on said rim section (6) by means of an enclosure section (7) circumferentially provided on the shaft section (5) of the insert (4), and whereby in locked-into-place position said enclosure section (7) of the insert (4) is supported, on the one hand, on a contact edge (12) circumferentially provided on the inside of said tank (1) with the aid of a circumferential step (13) provided on said enclosure section (7) and, on the other, on an outside area (15, 15/1) of the tank (1) with the aid of the counter pull of a tension ring (14) circumferentially arranged on the insert (4), **characterised in that** in the area of a bottom (7/1) of the enclosure section (7) at least one circumferential radial seal (9) sealing off the rim section (6) of the tank (1) is arranged and that the tension ring (14) of the insert (4) is a separate part.

2. Tank according to Claim 1, **characterised in that** the separate tension ring (14) supports itself, on the one hand, with its front end and with a ring section (30) on a protrusion (31) circumferentially provided on the shaft section (5) of the insert (4), and, on the other, on a lower-level plane (15) via its circumferential support rim (16).

3. Tank according to the Claims 1 and 2, **characterised in that** the tank outside area (15, 15/1) is formed by a plane (15) which is at a lower level in respect of an external contour of the tank (1), on which lower-level plane (15) the circumferential support rim (16) provided on the end of the tension ring (14) of the insert (4) rests in a supporting manner.

4. Tank according to the Claims 1 to 3, **characterised in that** the ring section (30) of the separate tension ring (14) can be pushed on to the shaft section (5) of the insert (4) in axial direction and, together with the circumferential protrusion (31) of the shaft section (5), forms a groove-and-tongue system (33, 34) and that the lower-level plane (15) has raised beads (32) with which - for the purpose of preventing the insert (4) from turning relative to the tank (1) - steps (39) on the flanks of the support rim (16) correspond positively.

5. Tank according to Claim 1, **characterised in that** the outer section (15, 15/1) of the tank (1) is formed by a downward projecting, approximately U-shaped profile (15/1) on whose back (17) the tension ring (14) contacts with a cover (18) whose design is roughly complementary to said back (17).

6. Tank according to one or several of the foregoing Claims 1 to 5, **characterised in that** the tank internal end of the shaft section (5) has a circumferential stop cone (19) which for the purpose of locking the insert (4) on the tank (1) into place can be pressed into the orifice (2) limited by the rim section (6) of the tank (1), whereby in this locked position the circumferential step (13) provided on the enclosure section (7) of the insert (4) contacts the circumferential contact edge (12) on the tank (1).

7. Tank according to Claim 6, **characterised in that** the tension ring (14) and/or the stop cone (19) of the insert (4) are possessed of an increased, radial elasticity in the form of recesses (24 and 38) provided on the circumference of the tension ring (14) and on the circumference of the stop cone (19), spaced at a distance relative to each other and arranged in the longitudinal direction of the insert (4) and that if the enclosure section (7) is locked into place on the rim section (6) the circumferential step (13) of the enclosure section (7) has a circumferential protrusion (11) which encompasses the contact edge (12) of said enclosure section (7).

8. Tank according to Claim 7, **characterised in that** the inside of the shaft section (5) of the insert (4) has a circumferential groove (35) for supporting a contact ring, a contact bush, a sieve or a similar device and that the internal end of said shaft section (5) has an additional, circumferential groove (36) for supporting a tension ring.

9. Tank according to one or several of the foregoing Claims 1 to 8, **characterised in that** at least in the area of its bottom (7/1) the insert (4) has - for the purpose of preventing it from turning relative to the tank (1) - a cross-section which is designed roughly complementary to the orifice (2) of the rim section (6) on the tank (1) and differs from a circular cross-section and that the bottom (7/1) has at least one circumferential ring groove (27) for supporting the radial seal (9) sealing off a contact face (2/1) on the rim section (6).

10. Tank according to one or several of the foregoing Claims 1 to 9, **characterised in that** the insert (4) holds the connection piece (3, 3/1) via a jointly established bolted connection (8, 10), whereby the connection piece (3, 3/1) is provided in the form of a connection neck (3) or an end cover (3/1) and that the connection neck (3) is provided in the form of either a connection piece for a reservoir transmitter or a supply unit or a drain valve for compressed-air reservoirs or a compressed-air adapter for line systems or a tank filler neck or a similar device.

11. Tank according to one of the foregoing Claims 1 to 10, **characterised in that** the interior of the insert (4) has an inner face (22) on the end of the bolted connection (8, 10) and that at least one seal (23) contacts said inner face (22) in a sealing manner and is housed in a ring groove (20) on the circumference of the connection neck (3).

12. Tank according to one of the foregoing Claims 1 to 11, **characterised in that** the insert (4) holds a connection neck (3) designed as a tank filler neck and, for the purpose of its stabilisation in the tank (1), supported via a contact face (25), provided on the end of neck (3), on a counterholder (26) provided on the inside of the tank (1).

13. Tank according to one of the foregoing Claims 1 to 12, **characterised in that** the insert (4) is a filler neck.

## Revendications

1. Réservoir pour véhicules automobiles, comportant au niveau d'une ouverture (2) du réservoir (1) un insert (4) auquel peut être fixé un raccord (3, 3/1), l'insert (4) étant reçu avec étanchéité, par son segment (5), à l'intérieur d'une collerette (6) formée à la périphérie de l'ouverture (2) du réservoir (1) et pouvant s'enclipser sur ladite collerette (6) au moyen d'un profil d'encastrement (7) formé à la périphérie du segment (5) de l'insert (4), le profil d'encastrement (7) de l'insert (4), en position encastrée, s'appuyant, d'une part, par un talon (13) formé à sa périphérie, sur un rebord d'appui périphérique (12) de la collerette (6) du réservoir (1) situé à l'intérieur de ce dernier et, d'autre part, en contre-traction, par une bague de serrage (14) disposée à la périphérie de l'insert (4), sur une zone (15, 15/1) située à l'extérieur du réservoir (1), **caractérisé en ce qu'**au niveau d'un fond profilé (7/1) du profil d'encastrement (7) est disposé au moins un joint radial périphérique (9) assurant l'étanchéité par rapport à la collerette (6) du réservoir (1) et que la bague de serrage (14) de l'insert (4) constitue un composant séparé.

2. Réservoir selon la revendication 1, **caractérisé en ce que** la bague de serrage séparée (14) s'appuie, d'une part, côté frontal, par un segment (30) de la bague, sur un épaulement (31) formé à la périphérie du segment (5) de l'insert (4) et, d'autre part, par l'intermédiaire de son bord d'appui périphérique (16), sur le plan de niveau inférieur (15).

3. Réservoir selon les revendications 1 et 2, **caractérisé en ce que** la zone (15, 15/1) située à l'extérieur du réservoir (1) est formée d'un plan (15) de niveau inférieur à celui d'une enveloppe extérieure du réservoir (1), plan sur lequel vient porter le bord d'appui périphérique (16) prévu à l'extrémité de la bague de serrage (14) de l'insert (4).

4. Réservoir selon les revendications 1 à 3, **caractérisé en ce que** le segment (30) de la bague de serrage séparée (14) est enfilable dans le sens axial sur le segment (5) de l'insert (4) et forme avec l'épaulement (31) du segment (5) un ajustement tenon-mortaise (33, 34) et que le plan de niveau inférieur (15) présente des moulures en saillie (32) conjuguées avec blocage - en vue d'empêcher l'insert (4) de tourner par rapport au réservoir (1) - à des talons latéraux (39) du bord d'appui (16).

5. Réservoir selon la revendication 1, **caractérisé en ce que** la portion extérieure (15, 15/1) du réservoir (1) est constituée d'un profilé en saillie en forme approximative de U (15/1) sur le dos (17) duquel repose la bague de serrage (14) par un cambrage (18) de forme approximativement complémentaire de celle du dos (17).

6. Réservoir selon l'une ou plusieurs des revendications 1 à 5 précédentes, **caractérisé en ce que** l'extrémité du segment (5) situé à l'intérieur du réservoir présente un épanouissement conique périphérique (19) qui, en vue d'encliqueter l'insert (4) sur le réservoir (1), est encastrable dans l'ouverture (2) du réservoir (1) limitée par la collerette (6), le talon (13) formé à la périphérie du profil d'encastrement (7) de l'insert (4) venant porter, dans cette position encastrée, sur le rebord d'appui périphérique (12) du réservoir (1).

7. Réservoir selon la revendication 6, **caractérisé en ce que** la bague de serrage (14) et/ou l'épanouissement conique (19) de l'insert (4) présentent une élasticité radiale renforcée, que cette élasticité radiale renforcée est engendrée par des échancrures (24 et/ou 38) prévues à la périphérie de la bague de serrage (14) et à la périphérie de l'épanouissement conique (19) et disposées dans la direction longitudinale de l'insert (4) et que le talon périphérique (13) du profil d'encastrement (7) présente au niveau du de la collerette (6) une saillie périphérique (11) prenant derrière le rebord d'appui (12).

8. Réservoir selon la revendication 7, **caractérisé en ce que** le segment (5) de l'insert (4) présente à l'intérieur une rainure périphérique (35) destinée à recevoir une bague d'appui, une douille d'appui, un crible ou un dispositif analogue et que le segment (5) présente à son extrémité intérieure une rainure périphérique additionnelle (36) destinée à recevoir une bague de serrage.

9. Réservoir selon l'une ou plusieurs des revendications 1 à 8 précédentes, **caractérisé en ce que** l'insert (4) présente au moins au niveau de son fond profilé (7/1) - en vue de l'empêcher de tourner par rapport au réservoir (1) - une section différente d'une section circulaire, de forme approximativement complémentaire de celle de l'ouverture (2) de la collerette (6) du réservoir (1), et qu'il est prévu dans le fond profilé (7/1) au moins une rainure annulaire périphérique (27) destinée à recevoir un joint radial (9) assurant l'étanchéité en direction d'une surface d'appui (2/1) de la collerette (6).

10. Réservoir selon l'une des revendications 1 à 9 précédentes, **caractérisé en ce que** l'insert (4) maintient le raccord (3, 3/1) par l'intermédiaire d'un assemblage vissé (8, 10), le raccord (3, 3/1) étant constitué d'un branchement (3) ou d'un bouchon (3/1), et le branchement (3) étant constitué soit d'un raccord d'un réservoir de stockage, soit d'une unité d'alimentation, soit d'un purgeur d'un réservoir d'air comprimé, soit d'un adaptateur pneumatique pour systèmes de tuyauteries, soit d'une tubulure de remplissage d'un réservoir, soit d'un dispositif analogue.

11. Réservoir selon l'une des revendications 1 à 10 précédentes, **caractérisé en ce que** l'insert (4) présente à l'intérieur une surface interne (22) prévue à l'extrémité de l'assemblage vissé (8, 10) sur laquelle vient porter avec étanchéité au moins un joint (23) logé dans une rainure annulaire (20) formée à la périphérie du raccord (3).

12. Réservoir selon l'une des revendications 1 à 11 précédentes, **caractérisé en ce que** l'insert (4) maintient un raccord (3) ayant la forme d'une tubulure de remplissage de réservoir et s'appuyant, en vue de sa stabilisation dans le réservoir (1), par l'intermédiaire d'une surface d'appui (25) prévue à son extrémité, sur un contre-bouterolle (26) formée à l'intérieur du réservoir (1).

13. Réservoir selon l'une des revendications 1 à 12 précédentes, **caractérisé en ce que** l'insert (1) est une tubulure de remplissage.
